# EUROPEAN PATENT SPECIFICATION

(11) **EP 4 420 312 B1**
(45) Date of publication and mention of the grant of the patent: **16.07.2025**
(21) Application number: 22706517.4
(22) Date of filing: 01.02.2022
(51) Int. Cl.: H04L 43/106, H04L 43/16, H04L 12/40, H04L 12/28, H04L 12/42, H04J 3/06, H04L 43/0852

(54) **METHOD AND DATA BUS HEAD NODE FOR DETERMINING A PROPAGATION DELAY BETWEEN THE HEAD NODE ON ONE SIDE AND A PLURALITY OF OTHER BUS NODES OF THE DATA BUS ON THE OTHER SIDE, CORRESPONDING DATA BUS SYSTEM AND VEHICLE COMPRISING THE DATA BUS SYSTEM**
VERFAHREN UND DATENBUS-KOPFKNOTEN ZUR LAUFZEITBESTIMMUNG ZWISCHEN DEM KOPFKNOTEN UND MEHREREN ANDEREN DATENBUSKNOTEN
PROCÉDÉ ET NOEUD DE TÊTE DE BUS DE DONNÉES POUR DÉTERMINER UN RETARD DE PROPAGATION ENTRE LE NOEUD DE TÊTE D'UN CÔTÉ ET UNE PLURALITÉ D'AUTRES NOEUDS DE BUS DU BUS DE DONNÉES DE L'AUTRE CÔTÉ, SYSTÈME DE BUS DE DONNÉES CORRESPONDANT ET VÉHICULE COMPRENANT LE SYSTÈME DE BUS DE DONNÉES

(43) Date of publication of application: 28.08.2024
(73) Proprietor: CARIAD SE, 38440 Wolfsburg (DE)
(72) Inventor: ZINNER, Helge, 39126 Magdeburg (DE)
(74) Representative: Hofstetter, Schurack & Partner
(86) International application number: PCT/EP2022/052354
(87) International publication number: WO 2023/147845

(56) References cited:
- AUGUSTO CIUFFOLETTI: "Preventing the Collision of Requests From Slave Clocks in the Precision Time Protocol (PTP)", IEEE TRANSACTIONS ON INSTRUMENTATION AND MEASUREMENT, IEEE, USA, vol. 60, no. 6, 1 June 2011 (2011-06-01), pages 2096 - 2103, XP011321743, ISSN: 0018-9456, DOI: 10.1109/TIM.2010.2058584
- HYEONG JUN KIM, URI LEE, MANHO KIM, SUK LEE: "Time-Dynchromization Method for CAN-Ethernet", MDPI - APPLIED SCIENCES, 11 December 2020 (2020-12-11), XP002807541, Retrieved from the Internet <URL:https://www.mdpi.com/2076-3417/10/24/8873/pdf-vor> [retrieved on 20220917]
- TEODOR NEAGOE ET AL: "NTP versus PTP in Com puter Networks Clock Synchronization", 2006 IEEE INTERNATIONAL SYMPOSIUM ON INDUSTRIAL ELECTRONICS, vol. 1, 1 July 2006 (2006-07-01), pages 317 - 362, XP055113815, ISBN: 978-1-42-440496-4, DOI: 10.1109/ISIE.2006.295613

## Description

The invention is concerned with a method and a data bus head node for determining a respective propagation delay between the head node on one side and a plurality of other bus nodes on the other side. The values of the propagation delays can be used for synchronizing the other bus nodes, e.g., for audio playback in a vehicle. The invention also comprises a data bus system and vehicle comprising the data bus system.

In a vehicle, several bus nodes of a data bus system can be used to playback audio signals e.g. for playing back music or presenting an announcement or for a hands-free telephone functionality. For example, each such bus node may comprise or control a digital-to-analog converter (DAC) and/or an audio amplifier for driving a respective loudspeaker. In order to provide a coordinated playback, the bus nodes need to be synchronized in that they playback their part of the audio signal in a coordinated or synchronized manner. For example, the bus nodes may be required to playback their audio data at the same time or with a predefined time delay. However, the corresponding audio data may be received by the bus nodes from a common head node of the data bus system that sends the audio data to the bus nodes over the data bus line. Each bus connection between the head node on one side and the respective bus node on the other side may lead through a section of the bus line with a different length, such that different propagation delays result when transmitting the audio data from the head node to the respective bus nodes. This needs to be considered when coordinating or synchronizing bus nodes for coordinating audio playback over a data bus system.

Audio playback is not the only application where synchronization of bus nodes in a data bus system is required. In general, for such applications, the knowledge of the propagation delay for transmitting data from a head node to the respective bus node and/or in the opposite direction is required.

Therefore, for the use case of audio transmission in a data bus (as well as many others), packet-based time synchronization of the components is required. Today this is done instead (e.g. for 100Mbit/s or 1000Mbit/s) via a standardized protocol IEEE802.1AS, PTP (or derived variants).

However, IEEE 802.1AS (as well as IEEE1588) was not specified for a data bus system that is generally available in a vehicle (IEEE802.3cg and the MultiDrop mode). The use of IEEE802.1AS may generally technically possible, but the state machines of that protocol do not fit and therefore the available software does not fit either. The use of today's software stacks would inevitably lead to problems when executing the protocol (and the runtime measurement).

One possible transmission technology for a data bus system is 10Mbit/s Ethernet. But, when using the MultiDrop mode, 10Mbit/s Ethernet cannot be used for PTP. Core technical problem: The measurement messages for measuring the transmission delay are received in a data bus system by all connected bus nodes (MultiDrop mode), i.e. PTP-based time synchronization in conjunction with 802.3cg in MultiDrop mode thus leads to problems, which is why safe deployment cannot be guaranteed. Receiving the measurement messages would lead to a reset of the state machines of the PTP-protocol on all uninvolved bus nodes. The problem as such "only" affects the 10Mbit/s bus in the outlined case, but the entire vehicle will be synchronized in the future and there will no longer be a homogeneous solution, if different PTP stacks have to be used.

For measuring the propagation delay, the described PTP-based time synchronization uses several measurement messages that need to be exchanged between one of the bus nodes on one side and the head node on the other side: According to the protocol, the bus node may send a propagation delay request Pdelay_req as a first message that will be received by the head node. The head node may then reply using a propagation delay response message Pdelay_resp and a propagation response follow up message Pdelay_resp_F_up. This allows the measurement of the propagation delay in the bus line connecting the head node and the bus node. However, in a data bus system, all the remaining bus nodes will also receive the measurement messages and might therefore react by also sending their own propagation delay response messages Pdelay_resp, which will disturb the measurement cycle.

AUGUSTO CIUFFOLETTI: "Preventing the Collision of Requests From Slave Clocks in the Precision Time Protocol (PTP)", IEEE TRANSACTIONS ON INSTRUMENTATION AND MEASUREMENT, IEEE, USA, vol. 60, no. 6, 1 June 2011 (2011-06-01), pages 2096-2103, XP011321743, ISSN: 0018-9456, DOI: 10.1109/TIM.2010.2058584 discloses a coordination algorithm that avoids the occurrence of collisions.

Hyeong Jun Kim, Uri Lee, Manho Kim, Suk, Lee: "Time-Synchronization Method for CAN-Ethernet", MDPI - Applied Sciences, 11 December 2020 (2020-12-11), XP002807541 discloses a method for performing time synchronization on a CAN-Ethernet heterogeneous network connected by a gateway.

TEODOR NEAGOE ET AL: "NTP versus PTP in Computer Network Clock Synchronization", 2006 IEEE INTERNATIONAL SYMPOSIUM ON INDUSTRIAL ELECTRO NICS, vol. 1, 1 July 2006 (2006-07-01), pages 317-362, XP055113815, DOI: 10.1109/ISIE.2006.295613 ISBN: 978-1-42-440496-4 discloses a comparison of NTP and PTP protocols in terms of their architecture, protocol implementation, sources of error and achievable performance.

It is an objective of the present invention to measure the individual propagation delays between a head node of a data bus system on one side and respective bus nodes of the data bus system on the other side.

The objective is accomplished by the subject matter of the independent claims. Advantageous developments with convenient and non-trivial further embodiments of the invention are specified in the following description, the dependent claims and the figures.

The present invention is defined by the independent claims. Advantageous embodiments are described in the dependent claims, the following description and the drawings. As one solution, the invention provides a method for determining a respective propagation delay between a head node on one side and a plurality of other bus nodes of a data bus system on the other side. The determination of the respective propagation delay comprises an exchange of predetermined measurement messages, e.g. those messages that have already been explained. The head node can be provided as a further bus node that acts as the bus master of the bus zone or bus branch to which the other bus nodes are connected. Each bus node can be, for example, a respective electronic control unit ECU that may be part of, for example, an audio playback device or a sensor device or an actuator, just to name examples.

The method comprises that the head node successively performs a respective measurement cycle, comprising for each measurement cycle that
- another one of the bus nodes is selected, and
- each remaining one of the bus nodes is switched by means of at least one sleep message from an awake state, in which the bus node responds to measurement messages, to a predetermined sleep state, in which the bus node remains unresponsive to any of the measurement messages, and
- the respective propagation delay measurement between the head node and the selected bus node is performed by exchanging the measurement messages, and
- each remaining bus node is activated from the sleep state by means of at least one wake-up signal (in order to return to the awake state).

In other words, for each bus node, the propagation delay is measured or determined individually while the remaining bus nodes are kept or switched into the sleep state. These remaining bus nodes can therefore not react to the measurement messages that are exchanged for determining the propagation delay. Thus, during each measurement cycle the selected bus node and the head node can act or can be operated as though they were the only bus nodes connected to the bus line of the data bus system. Therefore, the protocol used or the measurement messages exchanged can be those that are known from the prior art for measuring the propagation delay and that require that no other device react to the measurement messages. In particular, the above mentioned PTP-based time synchronization can thus be adapted to be used in a MultiDrop mode of an Ethernet, i.e. the PTP-based time synchronization can thus be applied in a data bus system where several bus nodes are connected to the same bus line or bus wire. The sleep message and the wake-up signal that are needed to perform the method are those that are available in the respective data bus system. For such data bus systems, according sleep messages and wake-up signals are available in the prior art.

The invention also comprises embodiments that provide features which afford additional technical advantages.

One development comprises that it is determined (by the head node) prior to the first measurement cycle and/or between each measurement cycle whether all of the bus nodes are in the awake state. If it is determined that at least one of the bus nodes is in the sleep state, that (sleeping) bus node is switched into the awake state by means of a wake-up signal. This ensures that all of the other bus nodes receive the sleep message for the next measurement cycle. This provides the advantage that there will be no bus node that is in the sleep state already while the sleep message is sent, as such a bus node may wake up or become active during the measurement cycle due to another event, for example an internal timer signal such that this bus node may react to a measurement message and may thus disturb the measurement cycle. For detecting that all bus nodes are in the awake state, a polling may be performed in that a predefined control message is sent to each bus node and the head node determines if every bus node sends a reply message. Additionally or alternatively, the head node may listen to messages on the data bus system and may determine from addresses or are contained in these messages whether all bus nodes are active and are sending messages.

One development comprises that in the respective measurement cycle the exchange of the measurement messages takes place according to a predetermined protocol and in the event that a measurement message contrary to the protocol is received during the respective measurement cycle, the transmitting bus node is identified on the basis of the measurement message that is contrary to the protocol and this bus node is then switched to the sleep state by means of an additional sleep message. The protocol can be, for example, the already described PTP-based time synchronization (precision time protocol, as defined, for example, IEEE 1588 2002 and IEEE1588-2008, IEEE802.1AS). The identity or address of the bus node that has sent the false or disturbing measurement message can be determined using that measurement message itself where the sending node is identified as the sender, for example by a node ID. If the measurement cycle is disturbed by such a node, this node will be explicitly sent or switched into the sleep state using the additional sleep message. This ensures that the measurement cycle can be continued or repeated without any further disturbance.

One further development comprises that the measurement cycle is then either repeated or a measurement message next in line according to the protocol is sent. Repeating the measurement cycle after switching the sent bus node into the sleep state ensures that the disturbance duet to the measurement message that was contrary to the protocol has no influence on the measurement. Alternatively by continuing the measurement using the next measurement message avoids an additional time delay in the measurement cycle. This also shortens the overall startup-time, if the measurement cycle is part of a startup procedure.

One further development comprises that during the respective measurement cycle the at least one wake-up signal is already transmitted prematurely before the last measurement message of the measurement cycle is transmitted. In other words, the re-activation or the start of the other bus nodes that are in the sleep state is already begun or initiated while the measurement of the propagation delay is still in progress. This shortens the duration of the measurement cycle.

One further development comprises that for all of the bus nodes or all the bus nodes currently in the sleep state, a minimum value of a wake-up time is determined that elapses between the transmission of the wake-up signal to the fastest bus node until that fastest bus node reaches the awake state, and the premature transmission of the wake-up signal occurs only, if the minimum value is greater than a remaining time duration for the complete exchange of the intended measurement messages plus a predetermined processing time value of the selected bus node. The minimum value can be determined in advance, for example during a configuration of the data bus system. The "fastest bus node" is the bus node that requires the least amount of time from receiving the wake-up signal to reaching the awake state. Thus by considering or taking into account the minimum value, it can be ensured that none of the bus nodes will reach its awaken state while there is still a measurement message transmitted over the data bus.

One further development comprises that the premature transmission occurs only, if it is detected that a data transmission meets a predetermined reliability criterion. The reliability criterion may express a condition regarding the noise on the data bus line and/or a number of already received erroneous messages. For example, if whether reliability criterion may comprise that the noise is measured by for example the head node must be below a predefined threshold and/or the number of already received erroneous messages must be below a predefined threshold. This ensures that during the remaining time of the measurement cycle no measurement message needs to be repeated due to a transmission error. This could otherwise cause a delay such that one of the bus nodes may reach its awake state before the last measurement message is transmitted successfully.

One further development comprises that the premature transmission only takes place, if the exchange of the measurement messages has so far proceeded according to the protocol and otherwise the measurement cycle is repeated. In other words, if there has already been a breach of protocol or an erroneous step in the protocol, the risk of encountering another or a further interruption or delay in the measurement cycle is present and therefore the other bus nodes should not be switched into the awake state prematurely.

One further development comprises that in the data bus the head node and the bus nodes are connected to a common bus line and each message of the head node reaches each of the bus nodes via the common bus line. In other words, and any message on the bus line reaches each other bus node (including the head node). In other words, the method may be applied to a data bus system where any message transmitted over the bus line can be "seen" or received by any other bus node (including the head node) as no data switch device separates the bus node. Nevertheless only one of the bus nodes at a time will be in the awake state during the respective measurement cycle such that no disturbing or interrupting additional measurement messages will be generated by another bus node that is currently not participating in the measurement cycle. As will be explained further below, this does not necessarily apply to other bus participants, i.e. other bus nodes, that are not part of the measurement cycles at all.

One further development comprises that the head node, after determining the propagation delays, transmits at least one data packet with output data to be processed and/or output by the bus nodes, wherein the data packet contains the output data together with a time stamp of a respective output time, and the output time is determined as a function of the largest determined propagation delay in such a way that the output time lies temporally after an expiry of the propagation delay. In other words, the output data will reach each of the bus nodes before the respective system time or clock of the bus nodes reaches the signals the output time given by the time stamp. Thus, each bus node will be ready for the processing and/or the output of the output data when the respective output time according to the time stamp is reached.

One further development comprises that the determination of the propagation delays is started, if at least one predetermined trigger event is detected. In other words, by defining a respective trigger event a skilled person can decide or control when the propagation delays are determined using the described measurement cycles. Suitable time points are, for example, the end of production, an end-of-line configuration, in a vehicle the ignition signal indicating that the vehicle has been activated or turned on can be used as an event trigger. When a software update is performed in the head node or one of the other bus nodes, this can also be defined as a trigger event. A change in the on-board data bus network such that the bus line may have changed, can also be used as a trigger event that can be set, for example, by the person doing the repair works. When a new resource, for example a new bus node, is connected to the data bus system, this can also be used or defined as a trigger event, when the head node determines a new bus subscriber or bus node.

One further development comprises that at least one further bus subscriber is additionally connected to the data bus, which is excluded from the determination of the propagation delays and therefore does not respond to the measurement messages, and each further bus subscriber remains excluded from switching to the sleep mode during the measurement cycles. In other words, the operation of any other bus subscriber that will not react to the measurement messages anyway, will not be interrupted or disturbed by performing the method for determining the propagation delays.

The measurement cycles depend on a successive selection of one of the bus nodes by the head node. The selection can be controlled, for example, by using the node ID of the bus nodes. For example, the bus nodes can be selected in the order of the reverse order of the value of their node ID. Additionally or alternatively, for each bus node there may be a value of priority or demand of availability. This can also be used to define the order in which the bus nodes are selected.

As a further solution, the invention provides a bus node that is adapted to be operated as a head node of a data bus system, wherein the bus node comprises a processor unit that is adapted to perform an embodiment of the inventive method. The head node can be adapted to operate the branch of the data bus system that leads to the other bus nodes as a master node. The remaining other bus nodes can be operated in a slave mode as is known from the prior art. The bus node can be designed as an electronic control unit.

The head node may comprise a data processing device or a processor circuit adapted to perform an embodiment of the method according to the invention. For this purpose, the processor circuit may comprise at least one microprocessor and/or at least one microcontroller and/or at least one FPGA (field programmable gate array) and/or at least one DSP (digital signal processor). Furthermore, the processor circuit may comprise program code which comprises computer-readable instructions to perform the embodiment of the method according to the invention when executed by the processor device. The program code may be stored in a data memory of the processor device.

As one solution, the invention provides a data bus system for a vehicle, the bus system comprising a head node and a plurality of other bus nodes, wherein the head node is an embodiment of the described bus node that is adapted to be operated as a head node and/or the data bus system is adapted to perform an embodiment of the inventive method. Preferably, the data bus system is based on an Ethernet technology, in particular a 10 Mbit/s Ethernet. For operating such an Ethernet as a data bus system, the so called MultiDrop mode can be used, as is defined, for example, in the following technical standardizations;

As one solution, the invention provides a motor vehicle comprising an embodiment of the bus system. In such a motor vehicle, using the data bus system allows to coordinate electronic control units that form a respective bus node of the data bus system in a synchronized manner by considering the propagation delays for data transmission over the bus line. The inventive vehicle is preferably designed as a motor vehicle, in particular as a passenger vehicle or a truck, or as a bus or a motorcycle.

The invention also comprises the combinations of the features of the different embodiments.

In the following an exemplary implementation of the invention is described. The figures show:
- Fig. 1: a schematic illustration of an embodiment of the inventive motor vehicle; and
- Fig. 2: a schematic illustration of a data bus system of the motor vehicle according to Fig. 1 during a startup of a data bus system;
- Fig. 3: a schematic illustration of the data bus system for illustrating a measurement cycle for determining a propagation delay;
- Fig. 4: a diagram illustrating a method for performing measurement cycles for several bus nodes of the data bus system;
- Fig. 5: a diagram for illustrating a refined version of the procedure of Fig. 4;
- Fig. 6: a diagram for illustrating an error handling during a measurement cycle;
- Fig. 7: a diagram for illustrating a procedure for shortening a measurement cycle;
- Fig. 8: a diagram for illustrating a procedure for determining a wake-up time of the fastest bus node;
- Fig. 9: a diagram for illustrating a procedure for determining the quantities used in the procedure illustrated in Fig. 8; and
- Fig. 10: a diagram for illustrating a procedure for prematurely sending a wake-up signal before the last measurement message of the current measurement cycle is transmitted.

In the figures identical reference signs indicate elements that provide the same function.

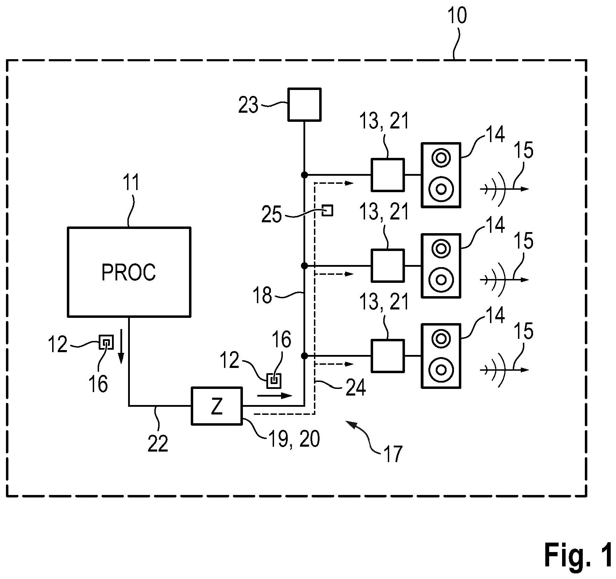

Fig. 1 shows a motor vehicle 10, that can be, for example, a passenger vehicle or a truck. In the vehicle 10 a processing unit 11 may generate output data 12 for controlling several electronic control units 13. For example, each electronic control unit 13 may be connected to a loudspeaker 14 and may drive the respective loudspeaker 14. The output data 12 can be, for example, audio data describing an audio signal for an audio playback 15 in the vehicle 10. It may be required that the electronic control unit 13 output their respective output data 12 in a coordinated or synchronized manner, for example at the same time or with a specific relative time offset. To this end, the output data 12 may comprise a time stamp 16 indicating when the respective electronic control unit 13 shall perform the output or playback of the output data 12. Another example for output data 12 can be control data for controlling electronic control unit 13 for controlling an actuator, for example a central locking system of vehicle 10 or indicator lights that shall flash synchronously for a left turn or right turn of the vehicle 10.

In order to distribute the output data 12 to the electronic control unit 13, a digital data bus system 17 may be provided in vehicle 10 where a bus line 18 may connect an electronic control unit 19 to the electronic control unit 13. In connection with the data bus system 17, the electronic control unit 19 may operate as a zone head node 20 for a data bus zone Z. The electronic control unit 13 can operate as bus nodes 21 that are bus subscriber that communicate with the head node 20 over the bus line 18. The bus line 18 may be designed such that any electric signal transmitted over bus line 18 can be measured or "seen" by each connected node, i.e. the head node 20 and the bus nodes 21.

The processing unit 11 may be connected to the head node 20 over a communication link 22. The processing unit 11 can be, for example, an infotainment system and/or a central processing unit of vehicle 10. Starting from head node 20, the output data 12 comprising the time stamp 16 may be distributed or forwarded to the bus nodes 21 over the bus line 18. The data bus system 17 can be provided, for example, by a 10 Mbit/s Ethernet running in the already described MultiDrop-mode. Fig. 1 also illustrates that there may be also at least one further or additional bus subscriber 23, for example another electronic control unit.

When a data packet comprising output data 12 is transmitted from the head node 20 to the bus nodes 21, it must be taken into account that the data transfer 24 of the output data 12 to the bus nodes 21 results in different propagation delays depending, for example, on the different length values of the sections of the bus line 18 connecting the head node 20 to the bus nodes 21. Thus, when sending out output data 12 with a time stamp 16 for processing time or output time, the time stamp 16 must be adapted to the maximum value 25 of the propagation delays occurring in the bus line 18 with regard to the bus nodes 21 that shall process the output data 12.

To this end, a method for determining the respective propagation delay between the head node 20 and the respective other bus nodes 21 may be performed in the data bus system 17.

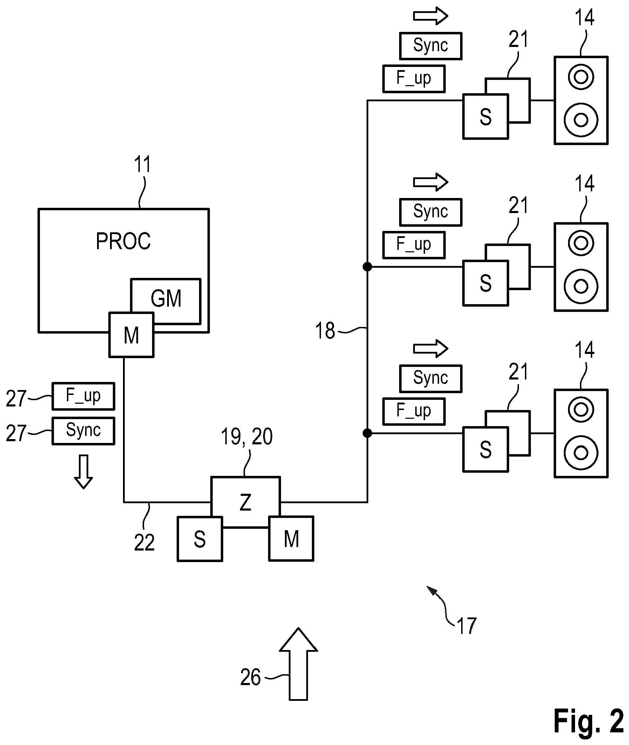

Fig. 2 illustrates how in the communication link 22 the processing unit 11 may be operated as a master M and the electronic control unit 19 may act as or be operated as a slave S. Internally, for the bus line 18, the electronic control unit 19 may act as head node 20. The control unit 19 may also be a master M, whereas the bus nodes 21 may be operated as a respective slave S. However, this is not necessarily the case for a head node. The master port may also be occupied by another control unit.

For a time synchronization, a grand master GM for e.g. PTP may initiate a time synchronization by sending out respective data packets or messages 27 comprising a sync message Sync and a follow-up message F_up These messages 27 may be propagated by the head node 20 over the bus line 18 to the bus nodes 21. This may trigger the determination or measurement of the propagation delays in bus line 18 for each bus node 21.

This synchronization may be triggered by a trigger event 26, for example at the end-of-line at a production process of the vehicle 10 or the data bus system 17 or one of the other trigger events 26 described already.

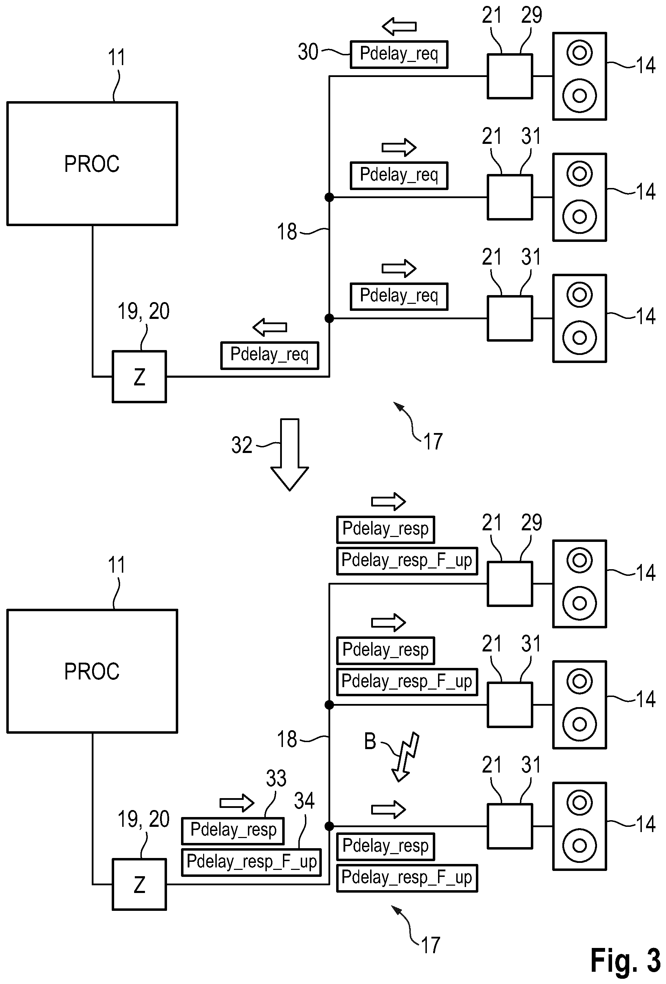

Fig. 3 illustrates the technical problem that needs to be prevented when propagation delays are measured in bus line 18.

In the illustration of Fig. 3 it is assumed that one of the bus nodes 21, bus node 29, starts the measurement of the propagation delay by sending or generating a first measurement message 30 Pdelay_req over the bus line 18 of the data bus system 17 to the head node 20. This measurement message 30 will also be received by the remaining bus nodes 31 of the bus node 21. As a reaction 32 to the measurement message 30, the head node 20 may generate measurement messages 33, 34, i.e. a message Pdelay_resp and a follow up message Pdelay_resp_F_up, which may be received by the bus node 29 but which will also be received over the same bus line 18 by the other remaining bus nodes 31. While bus node 29 is prepared for the measurement of the propagation delay as it has itself initiated the measurement message 30, the remaining bus nodes 31 will receive both a measurement message 30 and measurement messages 33 and 34, which is against the protocol for measuring the propagation delay, i.e. this constitutes a breach B of the protocol. This would cause a runtime error in the remaining bus nodes 31.

In the data bus system 17, this event is avoided or prevented by protecting the respective remaining bus nodes 31, while the bus node 29 and the head node 20 are performing the measurement of their propagation delay for their part or section of the bus line 18.

It should be noted here that any of the bus nodes 21 may be operated as the bus node 29 for measuring the propagation delay while the remaining bus nodes 21 will be protected as bus nodes 31.

For measuring the respective propagation delay for all bus nodes 21, each bus node at a time is operated as bus node 29 while the remaining bus nodes 31 are protected.

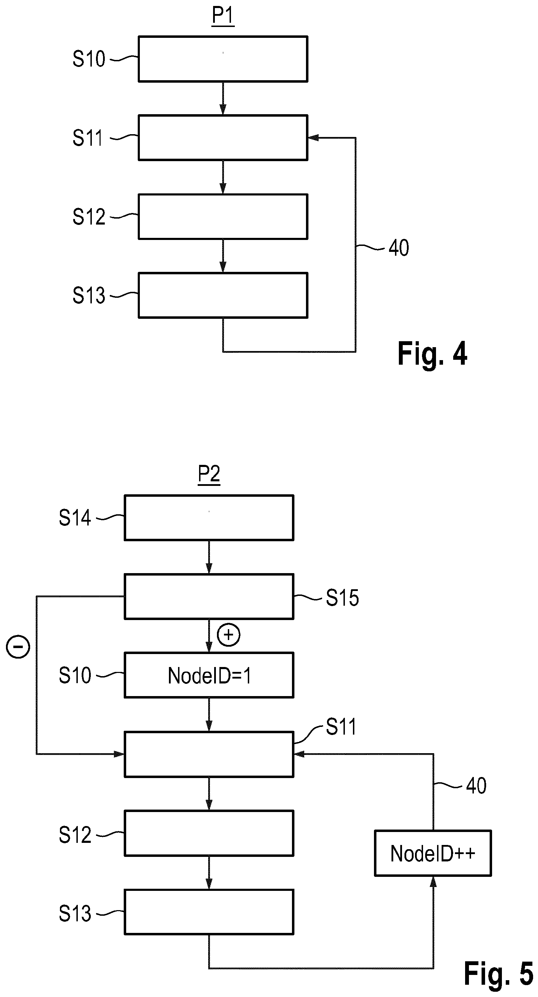

Fig. 4 illustrates, how for each bus node 21 a measurement cycle 40 may be performed for measuring the respective propagation delay between head node 20 and that specific bus node 29.

In the corresponding procedure P1 in a first step S10 the head node 20 may generate at least one wake-up message and send the wake-up message to each bus node 21. In a step S11, one of the bus nodes 21 is selected as the selected bus node 29 while the remaining ones of the bus nodes 21 are treated as remaining bus nodes 31 that should not participate in the measurement cycle 40. Note that also the bus subscriber 23 or (Fig. 1) may be excluded from this procedure P1 as it will not be influenced by the measurement messages 30, 33, 34. The order of selection of the bus nodes 21 can be determined, for example, as a function of their individual node IDs and/or their priority with regard to availability in the data bus system 17.

In the step S11, for the remaining bus nodes 31, are switched into a sleep state by sending a respective or a common sleep message which can be done by the head node 20. In a step S12 the measurement messages 30, 33, 34 may be exchanged between the selected bus node 29 and the head node 20. As the remaining bus nodes 31 are in the sleep state, they will not react to the measurement messages 30, 33, 34.

In a step S13, the head node 20 may wake up or switch the remaining bus nodes 31 from the sleep state into an awake state by generating at least one wake-up signal. Then, the measurement cycle 40 may be repeated by selecting the next bus node 21 in the selection order.

Fig. 5 illustrates a version of a procedure P2 providing an enhancement of the procedure P1. Additionally, with regard to the measurement cycle 40, it is illustrated, how in step S10 the first node may be selected (symbolically illustrated by NodelD = 1) and for the selection of the respective next node it is symbolically illustrated by noting down NodelD++ (with ++ the increment operator).

In a step S14 before the start of the measurement cycles 40, the head node 20 may determine which bus nodes 21 are available or present or active in the data bus system 17. In a step S15, it may be determined, if at least one of these bus nodes 21 is in the sleep state already. If none of the relevant bus nodes 21 that shall participate in the synchronization process, is in the sleep mode (is symbolized by the minus-symbol), step S10 may be omitted and step S11 may be immediately started. Otherwise, when there is at least one bus node 21 already in the sleep state (illustrated by the plus-symbol), step S15 may be followed by step S10.

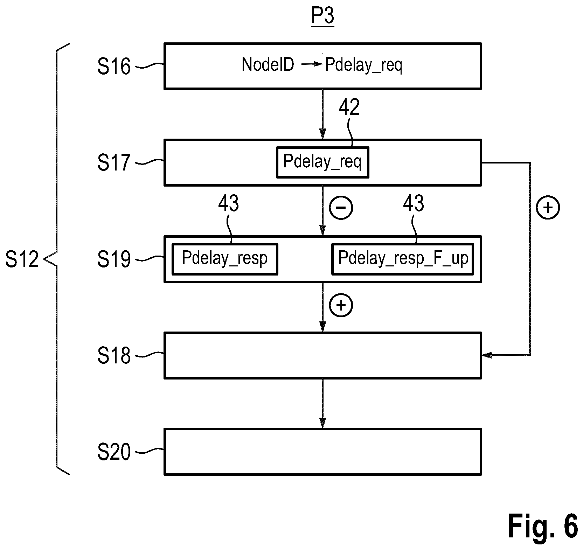

Fig. 6 illustrates a procedure P3, that allows an error handling in the case that during a measurement cycle 40 an unexpected measurement message is received by the head node 20 over the bus line 18. This may happen, if one of the remaining bus nodes 31 wakes up or changes into the awake state from the sleep state during the measurement cycle 40 of another selected bus node 29 such that the newly awakened or started bus node 31 may react to one of the measurement messages 30, 33, 34.

During the step S12, in a step S16, the head node 20 may receive the measurement message 30 Pdelay_req by those selected bus node 29 with the identification NodelD.

If in a step S17 it is determined that an unexpected measurement message, for example another measurement message Pdelay_req is received as an unexpected measurement message 42 that constitutes a breach 34 of protocol (illustrated or symbolized by the plus-symbol) this unexpected measurement message 42 may be analyzed in a step S18 in such that the NodelD or the identification of the bus node 31 that sent this unexpected measurement message 42, is identified.

If no unexpected message 42 is received and the measurement cycle 40 continues but an unexpected measurement message 43 Pdelay_resp and/or Pdelay_resp_F_up is received, in a step S19, this can also trigger the step S18. Once the identity of the bus node 31 that has sent the unexpected measurement message 42, 43, this unexpected message 42, 43 can be ignored or deleted. As the identity of the bus node 31 is now known, in a step S20 this bus node 31 can be switched into the sleep state by sending a sleep message to that bus node 31.

Then, the measurement cycle 40 may be repeated or continued.

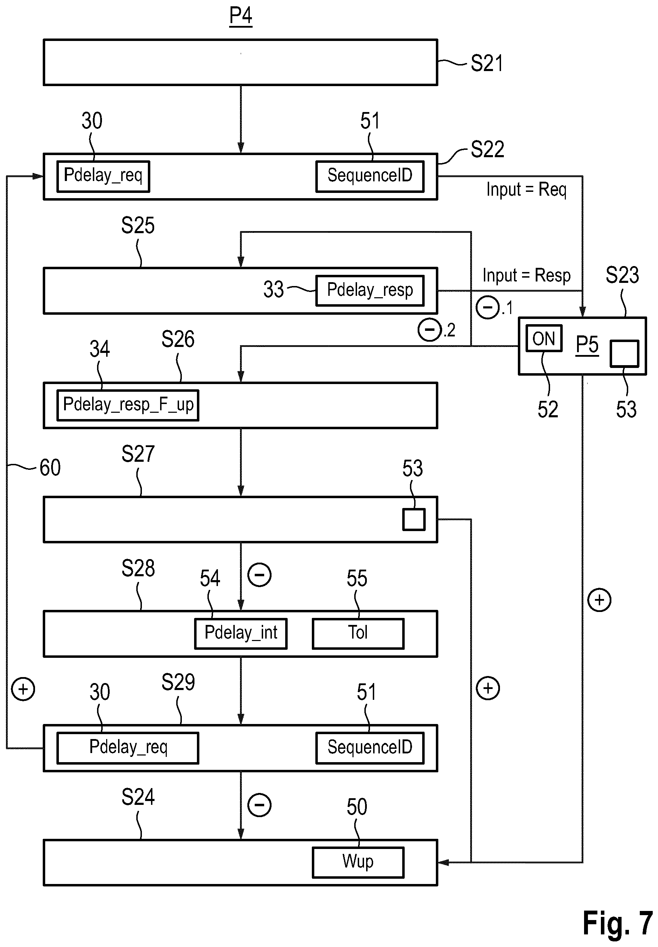

Fig. 7 illustrates a procedure P4 for speeding up or shortening the duration of a measurement cycle 40.

Fig. 7 illustrates how the head node 20 can determine the point in time when a wake-up signal 50 can be sent to the bus node 31 in their sleep state during a measurement cycle 40 such that the head nodes 31 will not reach their awake state before the last measurement message 34 has been exchanged between the head node 20 and the bus node 29.

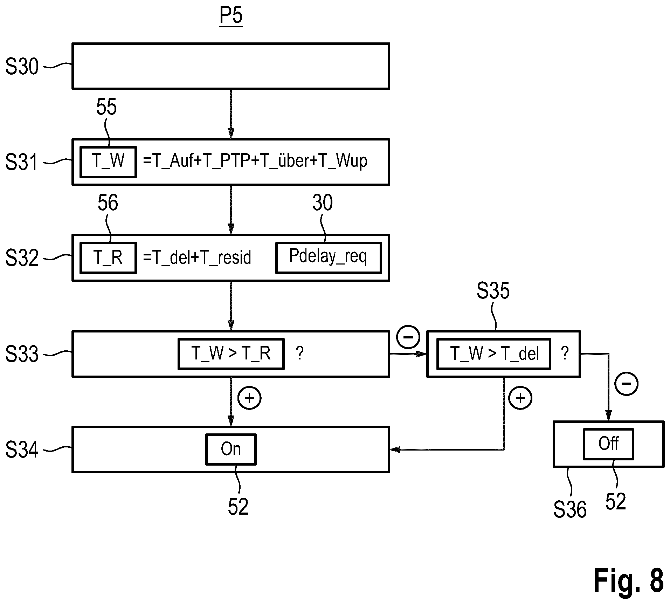

In a step S21 may start observing the point in time when the wake-up signal 50 can be or may be sent to the bus node 31. In a step S22 a measurement message 30 may be received and the bus node 20 may extract a sequence ID 51 indicating how often the bus node 29 has so far tried to initiate the measurement of the propagation delay. As the received measurement message 30 is a request message for propagation delay measurement request, in a step S23 it may be determined if a premature wake-up flag 52 is already set and at the same time a reliability criterion 53 concerning the transmission of data over the bus line 18 is fulfilled. The premature wake-up flag 52 can be determined based on a procedure P5 which will be explained in further detail below in connection with Fig. 8.

If the premature wake-up flag 52 is set and the reliability criterion 53 is fulfilled (condition + sign), the wake-up signal 50 for the bus node 31 in the sleep state can be generated in a step S24. Otherwise, in the case that the input has been the result from step S22 (request message 30 received), in a step S25 the measurement message 33 may be sent as an answer by the head node 20. Again in step S23 it can be verified if the premature wake-up flag 52 is set and the reliability criterion 53 is still fulfilled. If this is the case, step S24 can be performed, i.e. the wake-up signal 50 can be generated. Otherwise, if the measurement message 33 (response) has already been sent, the next step can be step S26 that comprises sending the second measurement message 34 to the requesting bus node 29. In a following step S27, the reliability criterion can be verified again and if the connection is reliable (criterion 53 fulfilled), the step S24 can be performed. Otherwise, if there is an unreliable connection (minus-sign), in a step S28 the head node 20 may wait for a predefined delay Pdelay_int 54 with an optional further tolerance value Tol to wait if the last measurement message 34 has arrived. This can be verified in a step S29 in that if the last measurement message 34 did not arrive, the bus node 29 may send a further measurement message 30 requesting the measurement of the propagation delay. If such a measurement message 30 is received and comprises or contains the same sequence ID 51 this indicates that the measurement message 34 was lost or destroyed on the bus line 18 such that the measurement cycle is not completed. In this case (plus-sign), the measurement cycle may comprise a repetition 60 of the measurement. Otherwise (minus-sign), the last measurement message 34 has been received and in step S24 the wake-up signal 50 may be sent or generated.

Fig. 8 describes the procedure P5 that may be part of step S23 (Fig. 7).

In a step S30 the head node 20 may start observing the remaining time or the time that has past so far in the respective measurement cycle 40. Step S30 may be started at the same time in parallel to step S21. In a step S31, a minimum value 55 of a wake-up time T_W may be determined as the sum of a startup time T_Auf, the time of setting up the protocol stack for the measurement protocol PTP, the time T_Über needed to transfer the measurement messages 30, 33, 34 and the time T_Wup for transmitting the wake-up signal 50. In a step S32, the reaction time of the head node 20 after receiving the measurement message 30 (request for measurement of propagation delay) can be calculated as reaction time 56 T_R as the sum of the delay time T_del that passes between the two measurement messages 33 and 34 and the initial reaction time T_resid that passes between receiving the measurement message 30 and sending the first measurement message 33.

In a step S33 it can be determined, if the minimum value 55 of the wake-up time T_W is larger than the overall reaction time T_R. In this case, the wake-up signal 50 may be sent in the beginning of a wake-up cycle 40. Thus, the premature wake-up flag 52 may be set permanently in a step S34.

If the minimum value 55 of the wake-up time T_W is determined in step S33 to be smaller than the overall reaction time 56, it may be determined in a step S35, the minimum value 55 of the wake-up time T_W is larger or greater than the time T_del that passes after sending the first measurement message 33 from the head node 20. If this is the case (plus-sign), the premature wake-up flag 52 may be set in step S34 after sending the first measurement message 33 from head node 20 (see Fig. 7, step S25 leading to step S23).

If the minimum value 55 of the wake-up time T_W is even shorter or smaller than the reaction time T_del (minus-sign), the premature wake-up flag 52 may be set permanently in step S36, as it is not possible to generate the wake-up signal 50 in a measurement cycle 40 before the last measurement message 34 has been sent.

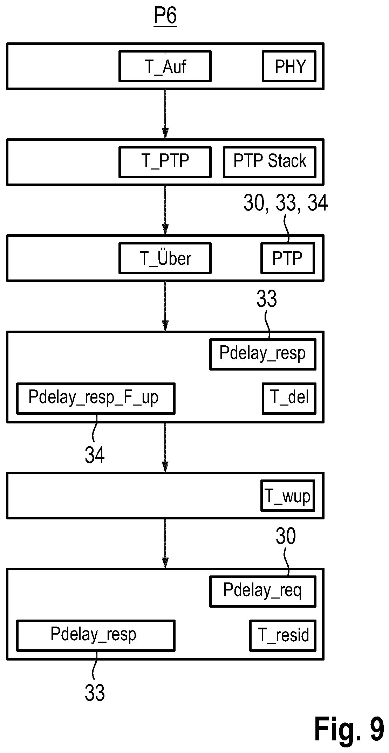

Fig. 9 lists the time values that may be used in the procedure P5 of Fig. 8.

The startup time T_Auf may be determined as the time that the physical connector PHY of the bus nodes needs to start after receiving the wake-up signal 50. The setup time for setting up the PTP Stack, i.e. the time value T_PTP is the time for implementing or loading or setting up in memory the stack for transmitting the measurement messages and receiving the measurement messages 30, 33, 34. T_Auf and T_PTP can be the configuration value stored in the data storage or memory of the head node 20. The transmission time for transmitting a configuration message 30, 33 and/or 34, T_Über can be estimated based on time stamps in the messages and/or can be measured in a laboratory and the measurement value can be stored in the head node 20. The time value for T_Über can be, for example, a worst-case-value determined for the shortest possible transmission time such that the value can be used independently of the true or present topography of the data bus system 17. The reaction time value T_del that passes between the two response measurement messages 33 and 34 can be an estimated value or it can be a value taken from the software that generates the two measurement messages 33, 34.

The transmission time value T_wup needed for transmitting the wake-up signal 50 can be an estimated value or a worst-case-value i.e. the shortest possible value that may occur in the data bus system 17.

The reaction time T_resid that passes between the reception of the measurement message 30 and the sending of the reply measurement message 33 may be an estimated value or a measured value that can be determined using a prototype of the head node 20.

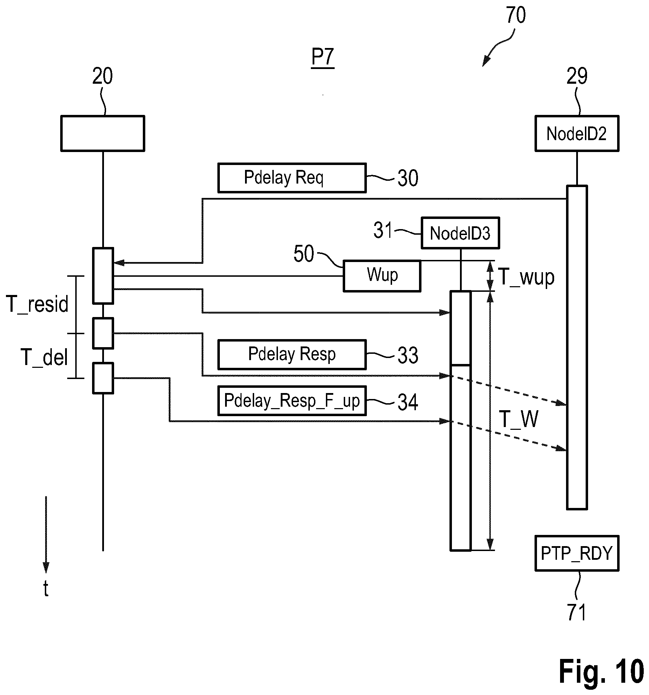

Fig. 10 illustrates a procedure P7 that illustrates the resulting premature wake-up 70. As an example and for illustration purposes only, it is assumed that the head node 20 has selected a bus node 29 with NodelD2. Another bus node 31 with the exemplary NodelD3 is initially in the sleep state. Over time t bus node 29 will send the measurement message 30 requesting the measurement of the propagation delay. In the head node 20, in step S22 (see Fig. 7) the measurement message 30 will be received and if in the step S23 (Fig. 7) it is determined that the premature wake-up flag 52 is set and the reliability criterion 53 is fulfilled, head node 20 may perform step S24 before sending the reply measurement message 33, i.e. the wake-up signal 50 is sent to the sleeping bus node 31, i.e. the bus node 31 in the sleep state. Once the wake-up signal 50 reaches the bus node 31, the wake-up time T_W will pass until the bus node 31 is ready or in the awake state 71 (PTP_Rdy).

In the meanwhile, the two answer measurement messages 33 and 34 may be sent by the head node 20 over the bus line 18 to the bus node 29. The last measurement message 34 will reach the bus node 29 before the bus node 31 will have reached the awake state 71.

The general task therefore is to create a (preferably cost-neutral, secure and fast) solution for the coming vehicle generation(s) that allows time synchronization over 10Mbit/s (in MultiDrop mode) without using a proprietary (and possibly expensive) implementation of an existing solution. The quality (as well as the test environment) can still be kept the same. The ide proposes a method, which enables a calculation of the runtime based on the current standard IEEE802.1AS2021 (or IEEE802.1AS2012).

Using an intelligent start-up of the network, the procedure ensures that only one additional node is active at any given time. While this one node is active, the runtime measurement is performed quasi exclusively. After the measurement, the measurement is then performed with another node. See also procedure 1 for the general procedure.

The idea proposes a procedure which checks the state of the bus nodes (nodes/controllers/sensors) of the network at a defined time (e.g. end of band, ignition signal / terminal30, after a software update, after a change in the on-board network, after adding new resources) and then ensures that all nodes are awake.

Afterwards a selective sleeping of all nodes takes place which are not in the row. Exactly one node always remains awake with which the runtime measurement (conforming to the standard) is then carried out. After successful execution the remaining nodes are woken up and exactly those are put to sleep which do not have to be configured any more or are not in the row. The procedure is repeated until all are configured.

The essential and special features and differences of the idea is a solution with standardized methods and protocols. This also creates backward compatibility with software stacks in use and also with new stacks. Advantageous is the combination of time synchronization with an intelligent wake-up and sleep method. In this state, the network can be configured and initially set completely independent of its topology. This procedure is thus completely independent of the Ethernet technology used. It is also advantageous because it is a completely silent or transparent configuration and, in the best case, a communication partner does not notice anything and does not need any special hardware or protocols. In addition, the procedure offers a very fast mode optimized for the startup time of the network.

The idea proposes, in a preferred embodiment, a method in several substeps, which makes it possible to perform a time synchronization resp. to perform the runtime measurements despite the use of an actually incompatible 10Mbit/s bus. The issue of network startup time is addressed especially in procedure P4 to P7. According to the OPENAlliance TC10 standard, a wake-up pulse over 10Mbit can be distributed in a few µs. Typically it is 2µs. Since this is a bus, everyone can be woken up very quickly. In addition, very few nodes are connected to a 10Mbit/s bus which means that the total configuration time will not be that long.

Procedure P2 can either be repeated at initial start-up, at end-of-band programming, cyclically, run after new hardware is inserted, or triggered by an application, or run in a different state.

The procedure according to Procedure P2 is controlled by the so-called head node (the master of the bus) (see Fig. 1). This determines first of all its participants on the bus. This can be done either by a pre-configuration or by listening on the bus.

In the next step, the head node determines whether all nodes on its bus are awake or capable of receiving Ethernet frames. This can be done either by polling, by querying entries, by physical measurements and so on. In this case it is not important to detect how many nodes are sleeping but if all are awake. If not all nodes are awake then the headnode initiates a wakeup of all nodes. (All nodes are woken up because this is conform to the standard OPEN Alliance TC10. If there is another wakeup procedure this is of course also possible). This can be done by a so-called wake-up pulse according to OPEN Alliance TC10 (standardization almost completed by May 2021) or by a similar pulse that would be detected by a passive signal detect. It does not play a decisive role over which mechanism is woken up. This could also be done via an additional line (e.g. CAN).

Sleeping nodes should also be woken up first so that they can be consciously put into the state of sleep and not wake up during the runtime measurement (participate in the bus again)

In the next step, the nodes (control units, etc.) that do not need to be configured or do not participate in the time synchronization are put to sleep again. This is ensured via a higher protocol. Nodes that do not participate in the time synchronization can remain awake. The procedure then determines the node (NodelD) which has not yet been configured (runtime measurement performed) and for which the NodelD is the smallest. This node is not put to sleep.

There are also other selection mechanisms for selecting the next node. It can also be decided applicatively that certain nodes are more important (configure earlier) than others and the NodelD sequence then plays no role. If it is e.g. a fast startup then the order of the configuration can depend on which nodes must be synchronized first.

In the next step the line delay (by default) is determined and after sending the Pdelay_Follow_up it is possible to start waking up all nodes immediately.

### See attachment: Procedure P3: Error handling

Procedure P3 shows how the procedure ensures when errors occur in the process. The procedure presented above allows only one node to be configured at a time. However, if several PDelay_req messages arrive from different receivers, or a PDelay_req message arrives from an unexpected receiver (one that should be asleep) then this must be logged and the measurement aborted. Abort means that no more response to the measurement is sent. In addition, it is logged which node (NodeID) was still awake. This or these nodes are then selectively put to sleep and the measurement is restarted or the Pdelay Req of the still awake node is duly responded to.

If another node reports during this runtime measurement, then the measurement is not to be discarded per se. The misbehavior of the other node has no direct effect on the node for which the measurement was intended. Therefore, it is not necessary to start/measure from the beginning.

Procedure P4 and Procedure P5 Shortening of synchronization time (for wake-up).

Procedure P5 shows a partial section of the method in which it is determined how long a wake-up process takes and with which it is determined at which time of the runtime measurement the wake-up can already be started. The wake-up comprises several steps, e.g. the path signal transport, the wake-up of the transceiver and the start of the PTP stack.

Procedure P6 determines the relevant parameters for the determination in procedure P5.

Procedure P4 shows a procedure which uses the results of procedure P5. After the receipt of a Pdelay_req message the procedure checks e.g. already whether the other nodes can be woken up. Here it is always important that the fastest node (which also implements PTP and has it active) sets the measure. If the startup time until PTP_ready is greater than the process in the head node then it can be woken up immediately. The PTP messages will not disturb the just waking up nodes.

If you want to be sure that the Pdelay_resp and Follow_up message has arrived, you must either wait for a timer or check the next Pdelay request message. Only then all nodes are to be woken up in this case. This process step allows a strong optimization regarding the synchronization of all nodes (resp. the runtime measurements) because everything is done in parallel.

Fig. 10 showing Procedure P7 graphically represents the sequence from procedure P4 again. A parallel wake-up to the runtime measurement is shown here and is theoretically also generally possible in practice with the values from OPEN Alliance TC10, and the start-up times according to IEEE802.3 for automotive PHYs.

Here is a few time values to illustrate the speed of the process and the possibility of parallel waking:
- Wakeup pulse forwarding to all nodes: maximum 2µs
- Wakeup of the phy < 100ms (typ. 30ms-60ms)
- PTP stack ready ~ 10-60ms (can be done in parallel to PHY WakeUp)
- Dispatch Pdelay_req = 0.54 µs
- Response Pdelay_resp and resp_follow_up <10ms (type < 2ms)
- Dispatch Pdelay_resp = 0.54 µs
- Dispatch Pdelay_resp_follow_up = 0.54 µs

Under normal conditions, synchronization of the network (< 8 nodes) is therefore also possible in less than 1 second. This relativizes the long waiting time for parallel wake-up and synchronization, and automotive typical wake-up times can also be achieved. If this is done at the end of the line or during a system update, the time required here does not matter.

The idea and the resulting product are especially interesting for the automotive sector since the topic of time synchronization has a significant meaning for the automobile and will get much more in the course of a sensor processing.

The core and novelty of the idea is that standardized methods can continue to be used and the car thus continues to develop on the way to becoming an loT device (Internet of Things). This promises better maintenance, more possibilities in the procurement of (standardized) software and compatibility with IT protocols, methods and tools.

Standardized (and already proven) methods also increase the security of the vehicle network and prevent it from deteriorating. Software quality can also be better guaranteed because the methods used have already been tested and are in use.

The idea also makes it possible to implement time synchronization for this standard in the first place. By using 10Mbit/s in conjunction with time synchronization, we expect to achieve a more consistent IP (Internet Protocol) network, add another level of scaling to the on-board network architecture, and eliminate unnecessary risks such as being tied to only one supplier.

As things stand today, there is also the risk that further lines (additional CAN) would have to be pulled to solve this problem. This is associated with higher system costs.

An advantage of the idea results from an intelligent combination of different standardized procedures. By "switching off" the nodes (sleep state) when the runtime measurement is performed, it can be ensured that the protocols do not run into a reset.

The retention of the standardized protocol enables an industry-wide use of the time synchronization, which has no knowledge of the overall procedure at all. This enables separation of actual synchronization and the intelligent procedure of wakeup and parallel time synchronization.

Advantageously, the safety of a vehicle can be significantly and very simply increased by the idea, especially without additional financial expenditure. Proprietary solutions can be bypassed. With the use of the newly introduced Ethernet protocol in automobiles, mechanisms are necessary that make use of simple techniques and given properties of technologies in order to be able to dispense with expensive implementations and further additional hardware. The network system according to the idea is improved in terms of cost and reliability.

Overall, the example shows how a method for time synchronization in a 10Mbit/s Ethernet data bus can be provided.

### REFERENCE SIGNS

- 10: motor vehicle
- 11: processing unit
- 12: output data
- 13: electronic control unit
- 14: loudspeaker
- 15: playback
- 16: time stamp
- 17: data bus system
- 18: bus line
- 19: electronic control unit
- 20: head node
- 21: bus node
- 22: communication link
- 23: bus subscriber
- 24: data transfer
- 25: maximum value
- 27: messages
- 29: selected node
- 30: measurement message
- 31: remaining node
- 32: reaction
- 33: measurement message
- 34: measurement message
- 40: measurement cycle
- 42: unexpected measurement message
- 43: unexpected measurement message
- 50: wake-up signal
- 52: wake-up flag
- 53: reliability criterion
- 55: minimum value
- 56: reaction time
- 60: repetition
- 70: premature wake-up
- 71: awake state

## Claims

1. Method for determining a respective propagation delay between a head node (20) on one side and a plurality of other bus nodes (21) of a data bus system (17) on the other side, the determination of the respective propagation delay comprising an exchange of predetermined measurement messages (30, 33, 34), the method comprising that for determining a respective propagation delay, the head node (20) successively performs a respective measurement cycle (40), comprising
for each measurement cycle (40) another one of the bus nodes (29) is selected, and
each remaining one of the bus nodes (31) is switched, by means of at least one sleep message, from an awake state (71), in which the bus node (31) responds to measurement messages (30, 33, 34), to a predetermined sleep state, in which the bus node (31) remains unresponsive to measurement messages (30, 33, 34), and
the propagation delay between the head node (20) and the selected bus node (29) is determined by exchanging the measurement messages (30, 33, 34), and
each remaining bus node (31) is activated from the sleep state by means of at least one wake-up signal (50),
wherein the method uses a PTP-based time synchronization for measuring the propagation delay.

2. Method according to claim 1, wherein it is determined by the head node (20) prior to the first measurement cycle (40) and/or between each measurement cycle (40) whether all of the bus nodes (21) are in the awake state (71), and if it is determined that at least one of the bus nodes (21) is in the sleep state, that bus node (21) is switched to the awake state (71) by means of an additional wake-up signal (50).

3. Method according to one of the preceding claims, wherein in the respective measurement cycle (40) the exchange of the measurement messages (30, 33, 34) takes place according to a predetermined protocol and in the event that a measurement message (42) contrary to the protocol is received during the respective measurement cycle (40), the transmitting bus node (21) is identified on the basis of the measurement message (42) that is contrary to the protocol and this transmitting bus node (21) is switched to the sleep state by means of an additional sleep message.

4. Method according to claim 3, wherein the measurement cycle (40) is repeated or a measurement message (30, 33, 34) next in line according to the protocol is sent.

5. Method according to one of the preceding claims, wherein during the respective measurement cycle (40) the at least one wake-up signal (50) is already transmitted prematurely before the last measurement message (30, 33, 34) of the measurement cycle (40) is transmitted.

6. Method according to claim 5, wherein for all of the bus nodes (21) or all the bus nodes (21) currently in the sleep state, a minimum value (55) of a wake-up time is determined that elapses from the transmission of the wake-up signal (50) to the fastest bus node (21) until that fastest bus node (21) reaches the awake state (71), and the premature transmission of the wake-up signal (50) occurs only, if the minimum value (55) is greater than a remaining time duration for the complete exchange of the intended measurement messages (30, 33, 34) plus a predetermined processing time value associated with the currently selected bus node (21).

7. Method according to claim 5 or 6, wherein the premature transmission occurs only, if it is detected for the data bus that a data transmission meets a predetermined reliability criterion (53).

8. Method according to any of claims 5 to 7, wherein the premature transmission only takes place, if the exchange of the measurement messages (30, 33, 34) has so far proceeded according to the protocol and otherwise the measurement cycle (40) is repeated.

9. Method according to any one of the preceding claims, wherein in the data bus the head node (20) and the bus nodes (21) are connected to a common bus line (18) and any message on the bus line (18) reaches each other one of the bus nodes (21).

10. Method according to any of the preceding claims, wherein the head node (20), after determining the propagation delays, transmits at least one data packet with output data (12) to be processed and/or to be output by the bus nodes (21), wherein the data packet contains the output data (12) together with a time stamp (16) of a respective output time, and the output time is determined as a function of the largest determined propagation delay in such a way that the output time lies temporally after an expiry of the propagation delay.

11. Method according to any of the preceding claims, wherein the determination of the propagation delays is started, if at least one predetermined trigger event is detected.

12. Method according to any of the preceding claims, wherein at least one further bus subscriber (23) is additionally connected to the data bus and the at least one further bus subscriber (23) is excluded from the determination of the propagation delays and therefore does not respond to the measurement messages (30, 33, 34), and each further bus subscriber (23) remains excluded from the switching to the sleep mode during the measurement cycles (40).

13. Bus node (21) that is adapted to be operated as a head node (20) of a bus system, wherein the bus node (21) comprises a processor unit that is adapted to perform a method according to any of the preceding claims.

14. Data bus system (17) for a vehicle, the bus system comprising a head node (20) and a plurality of other bus nodes (21), wherein the head node (20) is designed according to claim 13 and/or the data bus system (17) is adapted to perform a method according to any one of the claims 1 to 12.

15. Motor vehicle (10) comprising a bus system according to claim 14.

## Patentansprüche

1. Verfahren zum Bestimmen einer jeweiligen Laufzeitverzögerung zwischen einem Kopfknoten (20) auf einer Seite und einer Mehrzahl von anderen Busknoten (21) eines Datenbussystems (17) auf der anderen Seite, wobei die Bestimmung der jeweiligen Laufzeitverzögerung einen Austausch vorbestimmter Messnachrichten (30, 33, 34) umfasst, wobei das Verfahren umfasst, dass der Kopfknoten (20) zum Bestimmen einer jeweiligen Laufzeitverzögerung nacheinander einen jeweiligen Messzyklus (40) durchführt, umfassend:
für jeden Messzyklus (40) wird ein anderer der Busknoten (29) ausgewählt, und
jeder verbleibende der Busknoten (31) wird mittels mindestens einer Schlafnachricht von einem Wachzustand (71), in dem der Busknoten (31) auf Messnachrichten (30, 33, 34) reagiert, in einen vorbestimmten Schlafzustand geschaltet, in dem der Busknoten (31) auf Messnachrichten (30, 33, 34) nicht reagiert, und
die Laufzeitverzögerung zwischen dem Kopfknoten (20) und dem ausgewählten Busknoten (29) wird durch Austauschen der Messnachrichten (30, 33, 34) bestimmt, und
jeder verbleibende Busknoten (31) wird mittels mindestens eines Wecksignals (50) aus dem Schlafzustand aktiviert,
wobei das Verfahren eine PTP-basierte Zeitsynchronisation zum Messen der Laufzeitverzögerung verwendet.

2. Verfahren nach Anspruch 1, wobei durch den Kopfknoten (20) vor dem ersten Messzyklus (40) und/oder zwischen jedem Messzyklus (40) bestimmt wird, ob sich alle Busknoten (21) im Wachzustand (71) befinden, und wenn bestimmt wird, dass sich mindestens einer der Busknoten (21) im Schlafzustand befindet, dieser Busknoten (21) mittels eines zusätzlichen Wecksignals (50) in den Wachzustand (71) geschaltet wird.

3. Verfahren nach einem der vorhergehenden Ansprüche, wobei in dem jeweiligen Messzyklus (40) der Austausch der Messmeldungen (30, 33, 34) gemäß einem vorbestimmten Protokoll erfolgt und für den Fall, dass während des jeweiligen Messzyklus (40) eine dem Protokoll widersprechende Messmeldung (42) empfangen wird, wird der übertragende Busknoten (21) anhand der dem Protokoll widersprechenden Messmeldung (42) identifiziert und dieser übertragende Busknoten (21) mittels einer zusätzlichen Schlafmeldung in den Schlafzustand geschaltet.

4. Verfahren nach Anspruch 3, wobei der Messzyklus (40) wiederholt wird oder eine gemäß dem Protokoll nächste Messmeldung (30, 33, 34) gesendet wird.

5. Verfahren nach einem der vorhergehenden Ansprüche, wobei während des jeweiligen Messzyklus (40) das mindestens eine Wecksignal (50) bereits vorzeitig übertragen wird, bevor die letzte Messmeldung (30, 33, 34) des Messzyklus (40) übertragen wird.

6. Verfahren nach Anspruch 5, wobei für alle Busknoten (21) oder alle Busknoten (21), die sich aktuell im Schlafzustand befinden, ein Minimalwert (55) einer Weckzeit, die von der Übertragung des Wecksignals (50) an den schnellsten Busknoten (21) bis zum Erreichen des Wachzustands (71) des schnellsten Busknotens (21) vergeht, bestimmt wird und die vorzeitige Übertragung des Wecksignals (50) nur dann stattfindet, wenn der Minimalwert (55) größer ist als eine Restzeitdauer für den vollständigen Austausch der vorgesehenen Messmeldungen (30, 33, 34) zuzüglich eines dem aktuell ausgewählten Busknoten (21) zugeordneten vorbestimmten Verarbeitungszeitwerts.

7. Verfahren nach Anspruch 5 oder 6, wobei die vorzeitige Übertragung nur dann stattfindet, wenn für den Datenbus erkennt wird, dass eine Datenübertragung ein vorbestimmtes Zuverlässigkeitskriterium (53) erfüllt.

8. Verfahren nach einem der Ansprüche 5 bis 7, wobei die vorzeitige Übertragung nur dann stattfindet, wenn der Austausch der Messmeldungen (30, 33, 34) bisher gemäß dem Protokoll verlaufen ist und andernfalls der Messzyklus (40) wiederholt wird.

9. Verfahren nach einem der vorhergehenden Ansprüche, wobei im Datenbus der Kopfknoten (20) und die Busknoten (21) mit einer gemeinsamen Busleitung (18) verbunden sind und jede Nachricht auf der Busleitung (18) jeden der anderen Busknoten (21) erreicht.

10. Verfahren nach einem der vorstehenden Ansprüche, wobei der Kopfknoten (20) nach dem Bestimmen der Laufzeitverzögerungen mindestens ein Datenpaket mit von den Busknoten (21) zu verarbeitenden und/oder auszugebenden Ausgangsdaten (12) überträgt, wobei das Datenpaket die Ausgangsdaten (12) zusammen mit einem Zeitstempel (16) einer jeweiligen Ausgabezeit enthält und die Ausgabezeit in Abhängigkeit von der größten bestimmten Laufzeitverzögerung derart bestimmt wird, dass die Ausgabezeit zeitlich nach einem Ablauf der Laufzeitverzögerung liegt.

11. Verfahren nach einem der vorhergehenden Ansprüche, wobei die Bestimmung der Laufzeitverzögerungen gestartet wird, wenn mindestens ein vorbestimmtes Auslöseereignis erkannt wird.

12. Verfahren nach einem der vorhergehenden Ansprüche, wobei mindestens ein weiterer Busteilnehmer (23) zusätzlich mit dem Datenbus verbunden ist und der mindestens eine weitere Busteilnehmer (23) von der Bestimmung der Laufzeitverzögerungen ausgeschlossen ist und daher nicht auf die Messnachrichten (30, 33, 34) reagiert, und jeder weitere Busteilnehmer (23) während der Messzyklen (40) von dem Umschalten in den Schlafmodus ausgeschlossen bleibt.

13. Busknoten (21), der geeignet ist, als Kopfknoten (20) eines Bussystems betrieben zu werden, wobei der Busknoten (21) eine Prozessoreinheit umfasst, die geeignet ist, ein Verfahren nach einem der vorhergehenden Ansprüche durchzuführen.

14. Datenbussystem (17) für ein Fahrzeug, wobei das Bussystem einen Kopfknoten (20) und eine Mehrzahl weiterer Busknoten (21) umfasst, wobei der Kopfknoten (20) nach Anspruch 13 ausgebildet ist und/oder das Datenbussystem (17) zum Durchführen eines Verfahrens nach einem der Ansprüche 1 bis 12 geeignet ist.

15. Kraftfahrzeug (10) mit einem Bussystem nach Anspruch 14.

## Revendications

1. Procédé de détermination d'un temps de propagation respectif entre un nœud principal (20) sur un côté et une pluralité d'autres nœuds de bus (21) d'un système de bus de données (17) sur l'autre côté, la détermination du temps de propagation respectif comprenant un échange de messages de mesure prédéterminés (30, 33, 34), le procédé comprenant le fait que, pour déterminer un temps de propagation respectif, le nœud principal (20) exécute successivement un cycle de mesure respectif (40), comprenant le fait que
pour chaque cycle de mesure (40), un autre des nœuds de bus (29) est sélectionné, et chaque nœud restant des nœuds de bus (31) est commuté, au moyen d'au moins un message de veille, d'un état d'éveil (71), dans lequel le nœud de bus (31) répond à des messages de mesure (30, 33, 34), à un état de veille prédéterminé, dans lequel le nœud de bus (31) reste sans réponse face aux messages de mesure (30, 33, 34), et
le temps de propagation entre le nœud principal (20) et le nœud de bus sélectionné (29) est déterminé en échangeant les messages de mesure (30, 33, 34), et
chaque nœud de bus restant (31) est activé à partir de l'état de veille au moyen d'au moins un signal de réveil (50),
dans lequel le procédé utilise une synchronisation temporelle basée sur le protocole PTP pour mesurer le temps de propagation.

2. Procédé selon la revendication 1, dans lequel il est déterminé, par le nœud principal (20), avant le premier cycle de mesure (40) et/ou entre chaque cycle de mesure (40), si tous les nœuds de bus (21) sont à l'état de veille (71), et s'il est déterminé qu'au moins un des nœuds de bus (21) est à l'état de veille, ce nœud de bus (21) est commuté à l'état de veille (71) au moyen d'un signal de réveil supplémentaire (50).

3. Procédé selon l'une des revendications précédentes, dans lequel, dans le cycle de mesure respectif (40), l'échange des messages de mesure (30, 33, 34) a lieu conformément à un protocole prédéterminé et, dans le cas où un message de mesure (42) contraire au protocole est reçu pendant le cycle de mesure respectif (40), le nœud de bus émetteur (21) est identifié sur la base du message de mesure (42) qui est contraire au protocole, et ce nœud de bus émetteur (21) est commuté à l'état de veille au moyen d'un message de veille supplémentaire.

4. Procédé selon la revendication 3, dans lequel le cycle de mesure (40) est répété, ou un message de mesure (30, 33, 34) suivant dans la ligne conformément au protocole est envoyé.

5. Procédé selon l'une des revendications précédentes, dans lequel, pendant le cycle de mesure respectif (40), l'au moins un signal de réveil (50) est déjà transmis prématurément avant la transmission du dernier message de mesure (30, 33, 34) du cycle de mesure (40).

6. Procédé selon la revendication 5, dans lequel, pour tous les nœuds de bus (21), ou pour tous les nœuds de bus (21) actuellement à l'état de veille, est déterminée une valeur minimale (55) d'un temps de réveil qui s'écoule depuis la transmission du signal de réveil (50) au nœud de bus le plus rapide (21) jusqu'à ce que ce nœud de bus le plus rapide (21) atteigne l'état de veille (71), et la transmission prématurée du signal de réveil (50) ne se produit que si la valeur minimale (55) est supérieure à la durée restante pour l'échange complet des messages de mesure prévus (30, 33, 34) plus une valeur de temps de traitement prédéterminée associée au nœud de bus actuellement sélectionné (21).

7. Procédé selon la revendication 5 ou 6, dans lequel la transmission prématurée ne se produit que s'il est détecté, pour le bus de données, qu'une transmission de données satisfait un critère de fiabilité prédéterminé (53).

8. Procédé selon l'une quelconque des revendications 5 à 7, dans lequel la transmission prématurée n'a lieu que si l'échange des messages de mesure (30, 33, 34) s'est jusqu'à présent déroulé conformément au protocole et, dans le cas contraire, le cycle de mesure (40) est répété.

9. Procédé selon l'une quelconque des revendications précédentes, dans lequel, dans le bus de données, le nœud principal (20) et les nœuds de bus (21) sont connectés à une ligne de bus commune (18) et tout message sur la ligne de bus (18) atteint chaque autre nœud des nœuds de bus (21).

10. Procédé selon l'une quelconque des revendications précédentes, dans lequel le nœud principal (20), après avoir déterminé les temps de propagation, transmet au moins un paquet de données ayant des données de sortie (12) à traiter et/ou à fournir en sortie par les nœuds de bus (21), dans lequel le paquet de données contient les données de sortie (12) ainsi qu'une estampille temporelle (16) d'un temps de sortie respectif, et le temps de sortie est déterminé en fonction du temps de propagation le plus élevé déterminé, de telle manière que le temps de sortie se situe temporellement après une expiration du temps de propagation.

11. Procédé selon l'une quelconque des revendications précédentes, dans lequel la détermination des temps de propagation est démarrée si au moins un événement déclencheur prédéterminé est détecté.

12. Procédé selon l'une quelconque des revendications précédentes, dans lequel au moins un autre abonné de bus (23) est en outre connecté au bus de données et l'au moins un autre abonné de bus (23) est exclu de la détermination des temps de propagation et par conséquent ne répond pas aux messages de mesure (30, 33, 34), et chaque autre abonné de bus (23) reste exclu de la commutation au mode veille pendant les cycles de mesure (40).

13. Nœud de bus (21) qui est adapté pour être utilisé en tant que nœud principal (20) d'un système de bus, dans lequel le nœud de bus (21) comprend une unité de processeur qui est adaptée pour exécuter un procédé selon l'une quelconque des revendications précédentes.

14. Système de bus de données (17) pour un véhicule, le système de bus comprenant un nœud principal (20) et une pluralité d'autres nœuds de bus (21), dans lequel le nœud principal (20) est conçu selon la revendication 13 et/ou le système de bus de données (17) est adapté pour exécuter un procédé selon l'une quelconque des revendications 1 à 12.

15. Véhicule automobile (10) comprenant un système de bus selon la revendication 14.
